# EUROPÄISCHE PATENTSCHRIFT

(11) **EP 0 616 582 B1**
(45) Veröffentlichungstag und Bekanntmachung des Hinweises auf die Patenterteilung: **16.08.1995**
(21) Anmeldenummer: 93901679.6
(22) Anmeldetag: 15.12.1992
(51) Int. Cl.: B62D 5/04

(54) **HILFSKRAFTLENKUNG FÜR KRAFTFAHRZEUGE**
POWER-ASSISTED STEERING FOR VEHICLES
DIRECTION ASSISTEE POUR VEHICULES AUTOMOBILES

(30) Priorität: 21.12.1991 DE 4142546
(43) Veröffentlichungstag der Anmeldung: 28.09.1994
(73) Patentinhaber: ZF FRIEDRICHSHAFEN Aktiengesellschaft, 88038 Friedrichshafen (DE)
(72) Erfinder: LANG, Armin, D-7070 Schwäbisch Gmünd (DE); CERNY, Walter, D-7075 Mutlangen (DE)
(86) Internationale Anmeldenummer: EP9202906
(87) Internationale Veröffentlichungsnummer: WO9312965

(56) Entgegenhaltungen:
- EP-A- 0 142 988

## Beschreibung

Die Erfindung betrifft eine Hilfskraftlenkung für Kraftfahrzeuge nach dem Oberbegriff des ersten Anspruchs.

Nach der EP 01 42 988 B1 ist eine gattungsmäßige Hilfskraftlenkung bekannt. Dabei wird mit Hilfe eines Dreieckgenerators eine Dreieckspannung erzeugt und mit einer Sollspannung eines Regelverstärkers verglichen. Am Ausgang des Vergleichers entsteht eine Rechteckspannung mit einer konstanten Frequenz, die vom Dreieckgenerator vorgegeben ist. Die Pulslänge wird proportional der Sollwertspannung erzeugt. Damit ergibt sich eine konstante Ansteuerfrequenz für das Ventil. Derartige Ventile erzeugen häufig einen Pfeifton, der sich im Fahrzeug bemerkbar macht und sehr störend empfunden wird.

Die Erfindung hat die Aufgabe, bei einer Hilfskraftlenkung der eingangs beschriebenen Art störende Pfeiftöne zu vermeiden. Sie wird erfindungsgemäß durch die Merkmale des kennzeichnenden Teils in Verbindung mit denen des Oberbegriffs gelöst.

Da die Startflanken der Spannungsimpulse mit unterschiedlichen, zeitlichen Abständen voneinander beginnen, kann sich keine konstante Frequenz ausbilden und einen Pfeifton erzeugen. Vielmehr entsteht ein unbeachtliches Geräusch, das im übrigen Geräuschpegel des Fahrzeugs nicht stört.

Das Geräusch kann zu einem sogenannten "weißen Rauschen" werden, wenn sich der Abstand gemäß einem weiteren Vorschlag unregelmäßig ändert.

Die erfindungsgemäße Impulsfolge kann mit einer Prozessoreinheit entsprechend den Ansprüchen 3 bis 5 in einfacher Weise erzeugt werden, ohne die Stromregelung nennenswert zu beeinflussen.

Anhand einer Zeichnung, die sich auf das für das Verständnis der Erfindung Wesentliche beschränkt, wird die Erfindung näher beschrieben.

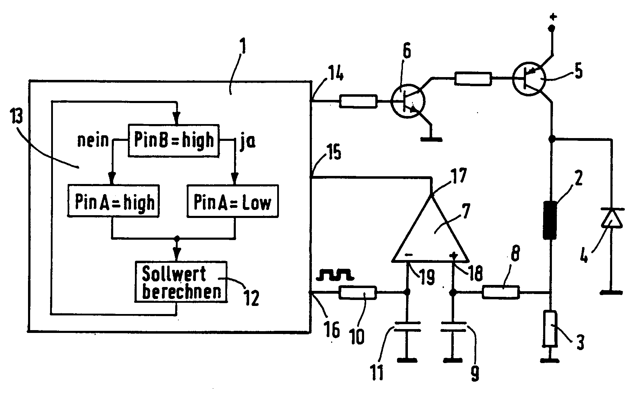

Die Figur zeigt eine prozessoreinheit 1 mit drei Ports, von denen der erste Fort 14 über eine Treiberstufe 6 an einem Leistungstransistor 5 angeschlossen ist. Der Leistungstransistor regelt den Speisestrom einer Magnetspule 2 in Abhängigkeit einer am ersten Port 14 anstehenden, gepulsten Spannung. Die Magnetspule 2 und ein Strommeßwiderstand 3 sind in üblicher Weise mit einer Freilaufdiode 4 überbrückt.

Am Strommeßwiderstand 3 wird der Strom der Magnetspule 2 als Spannung abgegriffen und einem nichtinvertierenden, zweiten Eingang 18 eines Komparators 7 über einen zweiten Widerstand 8 und einen zweiten Glättungskondensator 9 zugeführt. Ein gepulster Strom-Sollwert wird vom dritten Port 16 der Prozessoreinheit 1 ebenfalls über einen ersten Widerstand 10 und einen ersten Glättungskondensator 11 einem invertierenden, ersten Eingang 19 des Komparators 7 zugeführt. Ein Ausgang 17 des Komparators 7 ist mit einem zweiten Port 15 verbunden.

Die Prozessoreinheit 1 berechnet nach logischen Regeln den Sollwert 12 und enthält einen logischen Kreis, in welchem in einer regelmäßigen Folge der zweite Port 15 abgefragt und an den ersten Port 14 immer ein entgegengesetztes Signal ausgegeben wird. Ist der Sollwert größer als der Istwert, schaltet der Leistungstransistor ab, und ist der Sollwert kleiner als der Istwert, schaltet der Leistungstransistor 5 ein.

Wird der Leistungstransistor 5 angesteuert, fließt durch die Magnetspule 2 und den Meßwiderstand 3 ein Strom, der entsprechend einer e-Funktion ansteigt. Erreicht die Spannung am Meßwiderstand 3 die Größe der Sollwertspannung am Komparatoreingang, wird der Leistungstransistor 5 über die Treiberstufe 6 und die Prozessoreinheit 1 und den Komparator 7 wieder abgeschaltet. Dadurch entsteht an der Magnetspule 2 eine Rückschlagspannung, die über die Freilaufdiode 4 einen Freilaufstrom erzeugt, der entsprechend der Einschaltdauer des Leistungstransistors 5 und dem Innenwiderstand der Magnetspule 2 wieder abfällt. Unterschreitet die Spannung am Strommeßwiderstand 3 die Schaltschwelle des Komparators 7, wird der Leistungstransistor 5 wieder eingeschaltet und das Spiel beginnt von neuem.

Da die Abfragezeit der Prozessoreinheit 1 unabhängig von den geschilderten Vorgängen vorgegeben ist, erfolgt die Ein- und Abschaltung des Leistungstransistors 5 in stochastischen Zeitabständen. Die Abfrage am zweiten Port erfolgt nämlich nicht bei einem exakten Spannungspegel am nichtinvertierenden Eingang des Komparators 7, sondern entsprechend dem Programmablauf, der unabhängig vom Spannungsverlauf abläuft. Dadurch entsteht ein kleiner Fehler bei der Ansteuerung des Leistungstransistors 5. Aufgrund der Wahrscheinlichkeit verteilt sich dieser Fehler jedoch so auf die An- und Abschaltzeit, daß sich im Mittelwert ein Speisestrom der Magnetspule 2 entsprechend der Sollwertspannung ergibt, jedoch mit einer zufälligen, sich ständig wechselnden Frequenz. Hierbei wird unter Frequenz die Anzahl der Spannungsimpulse pro Zeiteinheit verstanden. Somit beginnen die Startflanken der Spannungsimpulse mit unterschiedlichen, zeitlichen Abständen voneinander, wodurch Pfeiftöne vermieden werden.

Grundsätzlich ist es auch möglich, daß der dritte Port 16 mit dem nichtinvertierenden Eingang 18 und die Magnetspule 2 mit dem invertierenden Eingang 19 des Komparators 7 verbunden ist. Es muß nur gewährleistet sein, daß ein Strom durch die Magnetspule 2 fließt, wenn der Sollwert größer ist als der Istwert und abgeschaltet wird, wenn der Sollwert kleiner ist als der Istwert. Wird der zweite Glättungskondensator 9 nicht an Masse gelegt, sondern mit dem ersten invertierenden Eingang 19 des Komparators 7 verbunden, ergibt sich eine Überlagerung der Istwertspannung auf den Sollwert. Dadurch regelt die Schaltung nicht auf den Spitzenwert der Istspannung, sondern auf deren arithmetischen Mittelwert, weil die Sollwertspannung dynamisch dem Istwert nachgeführt wird.
Diese Maßnahme macht die Schaltung weitgehend unabhängig von Bordspannungsschwankungen und Änderungen des Innenwiderstandes der Magnetspule.

### Bezugszeichen

- 1: Prozessoreinheit
- 2: Magnetspule
- 3: Strommeßwiderstand
- 4: Freilaufdiode
- 5: Leistungstransistor
- 6: Treiberstufe
- 7: Komparator
- 8: zweiter Widerstand
- 9: zweiter Glättungskondensator
- 10: erster Widerstand
- 11: erster Glättungskondensator
- 12: Sollwert
- 13: logischer Zweig
- 14: erster Port
- 15: zweiter Port
- 16: dritter Port
- 17: Ausgang des Komparators
- 18: nichtinvertierender Eingang
- 19: invertierender Eingang

## Patentansprüche

1. Hilfskraftlenkung für Kraftfahrzeuge mit einem elektromagnetisch betätigten Proportionalventil, durch dessen Magnetspule (2) ein Speisestrom fließt, der von einem Leistungstransistor (5) in Abhängigkeit einer gepulsten Spannung geregelt wird, indem die von einem Impulsgenerator erzeugten Spannungsimpulse in ihrer Impulslänge in Abhängigkeit einer Sollwertspannung moduliert werden, dadurch **gekennzeichnet,** daß dem Leistungstransistor (5) Spannungsimpulse zugeführt werden, deren Startflanken mit unterschiedlichen, zeitlichen Abständen voneinander beginnen.

2. Hilfskraftlenkung nach Anspruch 1, dadurch **gekennzeichnet,** daß sich der Abstand unregelmäßig ändert.

3. Hilfskraftlenkung nach Anspruch 1 oder 2, dadurch **gekennzeichnet,**
- daß eine Prozessoreinheit (1) mit mindestens drei Ports vorgesehen ist, daß an dem ersten Port (14) der Leistungstransistor (5) angeschlossen ist, daß die Prozessoreinheit (1) ein gepulstes Sollwertsignal erzeugt, das an dem dritten Port (16) ansteht, der über einen ersten Widerstand (10) mit einem ersten Eingang (19) eines Komparators (7) und einem gegen Masse geschalteten ersten Glättungskondensator (11) verbunden ist, wobei der zweite Eingang (18) des Komparators (7) über einen zweiten Glättungskondensator (9) an Masse liegt und über einen zweiten Widerstand (8) mit der Magnetspule (2) verbunden ist, zu der parallel eine Freilaufdiode (4) geschaltet ist,
- daß der Ausgang (17) des Komparators (7) mit dem zweiten Port (15) der prozessoreinheit (1) verbunden ist, daß die Prozessoreinheit (1) den zweiten Port (15) in Zyklen abfragt, die von der übrigen Steuerung unabhängig sind, und den ersten Port (14) so steuert, daß ein Strom fließt, wenn der Sollwert größer als der Istwert ist und abschaltet, wenn der Sollwert kleiner als der Istwert ist.

4. Hilfskraftlenkung nach Anspruch 3, dadurch **gekennzeichnet,** daß vor dem Leistungstransistor (5) eine Treiberstufe (6) geschaltet ist.

5. Hilfskraftlenkung nach Anspruch 4, dadurch **gekennzeichnet,** daß der zweite Glättungskondensator (9) nicht an Masse liegt, sondern mit dem ersten Eingang (19) des Komparators (7) verbunden ist.

## Claims

1. Power-assisted steering unit for motor vehicles with an electromagnetically operated proportionally acting valve, through whose magnetic coil (2) a supply current flows, which is controlled by a power transistor (5) as a function of a pulsed voltage with the voltage pulse generated by a pulse generator being modulated in its pulse length as a function of a nominal value voltage, characterised in that the power transistor (5) is supplied with voltage pulses whose leading edges begin at different intervals in time from one another.

2. Power-assisted steering unit according to claim 1, characterised in that the intervals vary in an irregular manner.

3. Power-assisted steering unit according to claim 1 or 2, characterised in that a processor unit (1) having at least three ports is provided, the power transistor (5) is connected to the first port (14), the processor unit (1) generates a pulsed nominal value signal, which is supplied to the third port (16), which is connected via a first resistance (10) to a first input (19) of a comparator (7) and a first smoothing capacitor (11) connected to earth, the second input (18) of the comparator (7) being connected to earth via a second smoothing capacitor (9) and via a second resistance (8) to the magnetic coil (2), with which a free running diode (4) is connected in parallel, the output (17) of the comparator (7) is connected to the second port (15) of the processor unit (1), the processor unit (1) interrogates the second port (15) in cycles as a function of the rest of the control system, and controls the first port (14) in such a manner that a current flows when the nominal value is greater than the actual value and is interrupted when the nominal value is less than the actual value.

4. Power-assisted steering unit according to claim 3, characterised in that a driver (6) is connected in front of the power transistor (5).

5. Power-assisted steering unit according to claim 4, characterised in that the second smoothing capacitor (9) is not connected to earth, but is connected to the first input (19) of the comparator (7).

## Revendications

1. Direction assistée pour véhicules automobiles, comportant une soupape proportionnelle à commande électromagnétique ayant une bobine d'excitation (2) dans laquelle passe un courant d'alimentation régulé par un transistor de puissance (5) en fonction d'une tension pulsée, où les impulsions de tension produites par un générateur d'impulsions ont une longueur d'impulsion qui est modulée en fonction d'une valeur prescrite de tension, **caractérisée** en ce que le transistor de puissance (5) reçoit des impulsions de tension dont les fronts initiaux sont séparés mutuellement par des intervalles de temps différents.

2. Direction assistée selon la revendication 1, **caractérisée** en ce que ledit intervalle varie irrégulièrement.

3. Direction assistée selon la revendication 1 ou 2, **caractérisée** :
- en ce qu'il est prévu un processeur (1) pourvu d'au moins trois ports d'accès, en ce que le transistor de puissance (5) est relié au premier port (14), en ce que le processeur (1) produit un signal pulsé de valeur prescrite qui est présent au troisième port (16), lequel est relié, à travers une première résistance (10), à une première entrée (19) d'un comparateur (7) et à un premier condensateur de lissage (11) mis à la masse, tandis que la seconde entrée (18) du comparateur (7) est mise à la masse à travers un second comparateur de lissage (9) et reliée, à travers une seconde résistance (8), à la bobine d'excitation (2) à laquelle une diode de protection (4) est branchée en parallèle,
- en ce que la sortie (17) du comparateur (7) est reliée au deuxième port (15) du processeur (1), en ce que le processeur (1) interroge le deuxième port (15) dans des cycles qui sont indépendants du reste de la commande et pilote le premier port (14) de telle manière qu'un courant passe lorsque la valeur prescrite est supérieure à la valeur réelle et est coupé lorsque la valeur prescrite est inférieure à la valeur réelle.

4. Direction assistée selon la revendication 3, **caractérisée** en ce que le transistor de puissance (5) est commandé par l'entremise d'un étage pilote (6).

5. Direction assistée selon la revendication 4, **caractérisée** en ce que le second condensateur de lissage (9) n'est pas mis à la masse, mais raccordé à la première entrée (19) du comparateur (7).
